# EUROPEAN PATENT SPECIFICATION

(11) **EP 1 377 465 B1**
(45) Date of publication and mention of the grant of the patent: **21.02.2007**
(21) Application number: 01974905.0
(22) Date of filing: 13.09.2001
(51) Int. Cl.: B60C 9/02, B60C 15/00, B60C 15/05

(54) **PNEUMATIC TIRE WITH REINFORCED BEAD PART**
LUFTREIFEN MIT VERSTÄRKTEM WULSTTEIL
PNEUMATIQUE POURVU D'UNE PARTIE BOURRELET RENFORCEE

(30) Priority: 20.03.2001 KR 2001014257
(43) Date of publication of application: 07.01.2004
(73) Proprietor: Kumho Tire Co., Inc., Seoul 110-061 (KR)
(72) Inventor: CHUNG, Doh-Zong, 809 Geumho-dong Seo-gu Gwangju (KR); PARK, Bok-Soo, 506-767 Kwangju-shi (KR); LEE, Myung-Jin, 506-757 Kwangju-shi (KR)
(74) Representative: Neyret, Daniel Jean Marie
(86) International application number: PCT/KR2001/001540
(87) International publication number: WO 2002/074559

(56) References cited:
- JP-A- 6 268 012
- JP-A- 10 338 001
- JP-A- 2000 118 209
- KR-U- 94 003 077
- US-A- 5 513 686
- US-A- 5 971 047

## Description

### Technical field

The present invention relates to a pneumatic tire with reinforced bead part installed on a rim without flange and, more particularly, to a pneumatic tire wherein bead part is reinforced by using a lump, which is not used in the prior art, placed between beads so that the bead part is not easily released from the rim of the tire while driving under low air pressure of tire.

### Background art

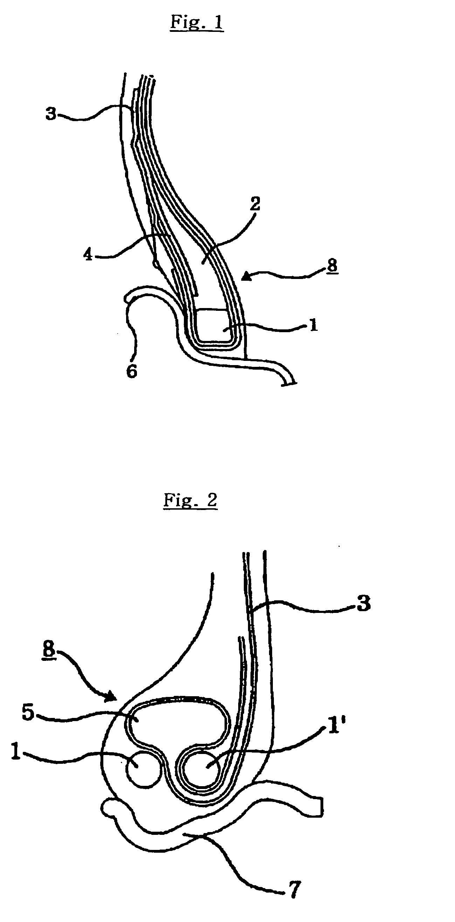

In conventional pneumatic tires, as shown in the Fig. 1, strong apex 2 is inserted in a bead part 8 where bead is placed, or insert 4 is installed, or the position of the end of carcass ply 3 is changed to reinforce the bead part. By using this method, cornering performance and durability of bead part are enhanced but the comfort of driving a car is reduced. The number 6 in Fig. 1 represents a flange.

In addition, the conventional tire having reinforced bead part has the problem that the tire is easily released from the rim when tire is deflated while driving, when the tire is installed on a rim without flange.

A tire corresponding to the preamble of claim 1 is known from US-A- 5 513 686.

### Summary of the invention

The object of the present invention is to solve the problem of bead part of the conventional pneumatic tire. For this object, a rubber lump is installed between beads to prevent the tire from releasing from the rim when the tire is deflated so that car accidents can be prevented.

### Brief description of drawings

Fig. 1 is a sectional view of the bead part of a conventional tire,
Fig. 2 is a sectional view of the bead part of a tire according to first embodiment of the present invention,
Fig. 3 is a sectional view of the bead part of a tire according to the second embodiment of the present invention, and
Fig. 4 is a sectional view of the bead part of a tire according to the third embodiment of the present invention.

### Explanation of marks in the figures

| | |
|---|---|
| 1, 1': bead, | 2: apex |
| 3: carcass ply | 4: insert |
| 5, 5': rubber lump | 6: flange |
| 7: bead seat | 8: bead portion |

### Best mode for carrying out the invention

To achieve the object as stated above, a rubber lump is installed between two beads which are arranged doubly, or two fold lumps are placed enclosing a single bead, the lump having the role that the bead part is not easily released from the bead seat of the rim when the tire is deflated.

The construction of the pneumatic tire having reinforced bead part of the present invention will be described in detail with reference to the accompanying drawings.

Fig. 2 is a cross-sectional view of the bead portion of the tire according to the first embodiment of the present invention, wherein two beads 1, 1' are placed facing each other with predetermined interval in the bead part 8 which is arranged on a bead seat, a rubber lump 5 is installed on said two beads passing through the beads, and a carcass ply 3 winds around said rubber lump 5.

Now the process of manufacturing the bead part to which a rubber lump 5 is applied will be described.

A carcass ply 3 is installed winding on the molding drum and a rubber lump 5 winds at an arbitrary point between both ends and center portion of the carcass ply 3, and the carcass ply 3 is turned up. Among two beads, the first bead 1 is placed at the front of the rubber lump 5 and the second bead 1' is placed at the rear of the rubber lump 5.

Accordingly, when the tire is deflated or under-inflated while driving, the carcass ply 3 is pulled toward the side of the tire, and due to this force the rubber lump 5 between two beads 1, 1' can prevent the bead part 8 from releasing from the bead seat 7. In this way the problem of prior art tire that the bead part is easily released from the rim due to the movement of bead part from bead seat of the rim to wall area when the tire is deflated can be solved.

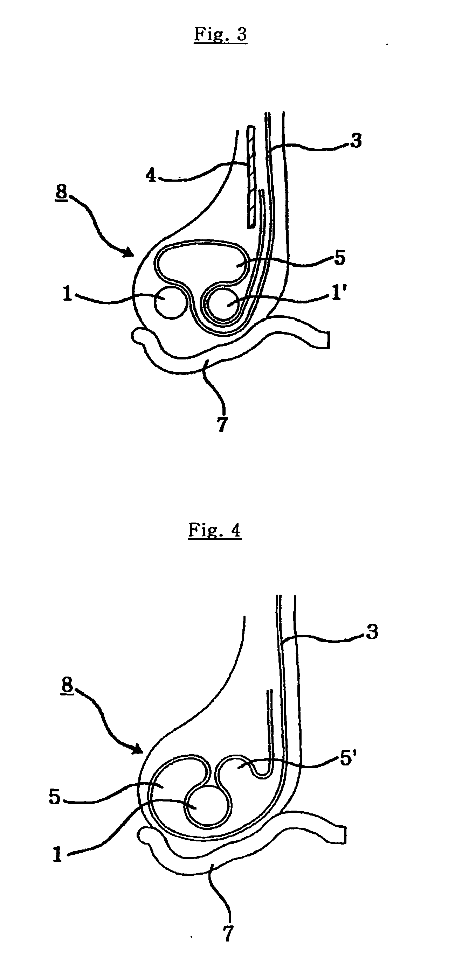

Fig. 3 is a cross-sectional view of the bead part of the tire according to the second embodiment of the present invention, wherein a steel insert 4 is inserted on the rubber lump 5 parallel to the carcass ply 3, so that the release of bead part from bead seat becomes more difficult.

Fig. 4 is a cross-sectional view of the bead portion of the tire according to the third embodiment of the present invention, wherein two fold rubber lumps 5, 5' are installed enclosing the single bead 1. The basic principle is the same as that of the first embodiment, the two fold rubber lump 5, 5' preventing the movement of bead 1 when the tire is deflated.

### Industrial applicability

By using the pneumatic tire with reinforced bead part of the present invention in a tire without flange, the bead part is not easily released from the rim when the tire is deflated or under-inflated while driving, and the function of the tire is not affected. Therefore, the car accidents caused by released bead part can be prevented.

## Claims

1. A pneumatic tire with reinforced bead part (8), wherein two bead cores (1, 1') are placed facing each other with predetermined interval in the bead part (8) which is arranged on a bead seat, a rubber lump (5) is installed on said two beads passing through the bead cores, and a carcass ply (3) winds around said rubber lump (5).

2. A pneumatic tire with reinforced bead part, wherein a bead core (1) is placed in the bead part (8) which is arranged on a bead seat, two fold rubber lumps (5, 5') are installed on both sides of said bead core, and a carcass ply (3) winds around said rubber lump (5, 5').

3. The pneumatic tire with reinforced bead part of claim 1 or claim 2, wherein an insert (4) is inserted on the rubber lump (5) parallel to the carcass ply (3).

## Patentansprüche

1. Luftreifen mit verstärktem Wulstteil (8), wobei zwei Wulstkerne (1, 1') einander zugewandt mit einem vorbestimmten Abstand in dem Wulstteil (8) platziert sind, welcher an einem Wulstsitz angeordnet ist, wobei eine Gummimasse (5) an den zwei Wulstkernen installiert ist und durch diese hindurch passiert, und wobei sich eine Karkasse (3) um die Gummimasse (5) herum windet.

2. Luftreifen mit verstärktem Wulstteil, wobei ein Wulstkern (1) in dem Wulstteil (8) platziert ist, welcher an einem Wulstsitz angeordnet ist, wobei zwei Gummimassen (5, 5') auf beiden Seiten des Wulstkerns installiert sind und sich eine Karkasse (3) um die Gummimassen (5, 5') herum windet.

3. Luftreifen mit verstärktem Wulstteil gemäß Anspruch 1 oder 2, wobei ein Einsatz (4) parallel zu der Karkasse (3) an der. Gummimasse (5) eingesetzt ist.

## Revendications

1. Pneumatique avec une partie de talon renforcée (8), dans lequel deux tringles (1, 1') sont placées l'une en face de l'autre avec un intervalle prédéterminé dans la partie de talon (8) qui est agencée sur une portée du talon, une bosselure de caoutchouc (5) est logée sur lesdits deux talons passant à travers les tringles, et un pli de carcasse (3) s'enroule autour de ladite bosselure de caoutchouc (5).

2. Pneumatique avec une partie de talon renforcée, dans lequel une tringle (1) est placée dans la partie de talon (8) qui est agencée sur une portée du talon, deux bosselures de caoutchouc repliées (5, 5') sont logées des deux côtés de ladite tringle, et un pli de carcasse (3) s'enroule autour desdites bosselures de caoutchouc (5, 5').

3. Pneumatique avec une partie de talon renforcée selon la revendication 1 ou la revendication 2, dans lequel un insert (4) est inséré sur la bosselure de caoutchouc (5) parallèlement au pli de carcasse (3).
